(19)

**Europäisches Patentamt**
**European Patent Office**
**Office européen des brevets**

(11) **EP 4 620 704 A1**

(12) **EUROPEAN PATENT APPLICATION**

(43) Date of publication:
**24.09.2025 Bulletin 2025/39**

(21) Application number: **25165456.2**

(22) Date of filing: **21.03.2025**

(51) International Patent Classification (IPC):
**B60C 23/00** (2006.01) **A01B 67/00** (2006.01)
**A01B 71/02** (2006.01) **F02D 41/02** (2006.01)

(52) Cooperative Patent Classification (CPC):
**B60C 23/002; B60C 23/003; B60C 2200/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2024 IT 202400006460**

(71) Applicant: **CNH Industrial Italia S.p.A.**
**10156 Torino (IT)**

(72) Inventors:
- **Bonavolontà, Gaetano**
  **10156 Turin (IT)**
- **Molinari, Riccardo**
  **10156 Turin (IT)**
- **Mariniello, Ciro**
  **10156 Turin (IT)**

(74) Representative: **CNH Industrial IP Department**
**Leon Claeysstraat 3A**
**8210 Zedelgem (BE)**

(54) **METHOD OF OPERATING AN AGRICULTURAL VEHICLE**

(57) An air management method for a central tire inflation system (CTIS) of an agricultural vehicle provided with an on-board air compressor and a tire, the method being operated by computer and comprising the calculation of a natural frequency of the vehicle on the basis of the tire pressure value, acquisition of a first signal representative of an acceleration of the vehicle cab and extraction of a dominant exciting frequency (DEF) value and a corresponding modulus value and then modification of said tire pressure in order to shift away said natural frequency (NET) value from said dominant exciting frequency.

FIG. 3

EP 4 620 704 A1

**Description**

Field of the invention

The present invention relates to the field of central tire pressure management systems (CTIS) for agricultural vehicles.

Description of the prior art

On-board automatic inflation systems are available for work and agricultural vehicles, but also for trucks.

Modern working vehicles are often fitted with central tire inflation systems (CTIS) that can adjust and maintain the pressure in the tires of the vehicle.

However, a fixed pressure value may not be ideal for all conditions. In certain cases, different values of pressure may be preferred depending on the load supported by the vehicle, the roughness of the road have several impacts on the mission of the vehicle.

For example, a reduced pressure of the tires could improve the footprint of the tire in order to increase the grip. However, reducing the pressure may result in changes in power losses on the wheels, which may result in the vehicle operating in a less efficient state than otherwise.

There is therefore a need for a way to ensure that the vehicle operates in an efficient way and of adjusting the tire pressure in a manner that addresses the above concerns.

Summary of the invention

The main object of the present invention to provide a method for better management of the tire pressure in order to confer a better comfort to the user. In response to adjusting the tire pressure, the present invention also allows calculating an appropriate engine working point based on the adjusted tire pressure. The present invention relates to a method wherein, upon receiving a signal representing a request to reduce the vertical acceleration of the vehicle, obtaining a current pressure signal indicating the current tire pressure for the at least one tire of the vehicle, determining a tire target pressure for the at least one tire to reduce the vertical acceleration of the vehicle, and modifying, the current pressure for the at least one tire of the vehicle to be equal to the tire target pressure. In response to modifying the current pressure for the at least one tire of the vehicle to be equal to the tire target pressure, the method may also include determining a change in engine power losses on the tires based on the respective tire pressure and the respective target tire pressure, determining a target engine working point based on the determined engine power losses and an engine output for the current engine working point, wherein engine output is either engine torque or engine angular speed or both. The signal representing a request to reduce the vertical acceleration of the vehicle may be an input that represents a request for improving driver comfort.

Therefore, the present invention enables adjusting the engine output in response to a change in tire pressure to increase efficiency and/or decrease fuel consumption accordingly.

When a vehicle travels on a pathway that is not perfectly flat, the dips or bumps of the pathway may induce vibrations on the vehicle. The effect of the pathway to a moving vehicle may be considered equivalent to applying a dominant excitation frequency on the vehicle. Such dominant excitation frequency is preferably estimated based on a vertical acceleration sensor located on the cab. Other sensors can be used to determine excitation frequencies, such as strain sensors.

Reduction of vertical acceleration may comprise calculating a natural frequency of a vertical mode of the vehicle. The natural frequency of the vertical mode of the vehicle in turn affects the vertical oscillations of a vehicle's cab, according to a current tire pressure and soil type. Thus, modifying the tire pressure can shift the natural frequency of the vehicle sufficiently far from a dominant excitation frequency to at least partially suppress the effects of the dominant excitation frequency. This in turn results in less vertical acceleration experienced by the operator of the vehicle, which in turn may be perceived by the operator as an improvement in comfort.

The vehicle's natural frequency for a given tire pressure is calculated by means of a mathematical model, wherein the mathematical model may express a relation between input parameters such as vehicle mass, tire pressure, soil type and tire stiffness. For example, on a sandy ground soil the vehicle's natural frequency on a vertical mode will be different to what it would be on icy ground soil or asphalt. The mathematical model may be derived via Finite Element Analysis, wherein the vehicle is divided into smaller elements and equations of motion for each element are solved. Alternatively, the vehicle may be modeled as a simple harmonic oscillator, i.e., a mass-spring system, wherein effects of the tire pressure, tire stiffness and type of soil are modelled as a spring. Many other ways to derive the natural frequency of vertical oscillation can be found in the relevant literature, for example in "Random vibration of a road vehicle" (Özgür Bayrakdar, Izmir Institute of Technology (Turkey), 2010) or "A Study of Vehicle Vibration with Multiple Degrees of Freedom Using OCTAVE and ANSYS" ("Alexander Wray, Jacob Reed, and Shengyong Zhang, Journal of Physics: Conference Series. Vol. 2014. No. 1. IOP Publishing, 2021).

In some embodiments, the model may be realized by means of a look up table obtained based on the "Magic Formula". The "Magic Formula" is an empirical equation used to empirically represent and interpolate previously measured tire force and moment curves. The general form of the Magic Formula, given by Pacejka, is:

$$y = D \cdot sin\{C \cdot arctan[B_x - E \cdot (B_x - \arctan(B_x))]\}$$

where B, C, D and E represent fitting constants for a given pressure and y is a force or moment resulting from a slip parameter x

Thanks to the mathematical model obtained or the lookup table, it is possible to predict a variation of the tire stiffness as a function of the pressure variation. The implementation of the lookup table enables avoiding complex on-board calculations. The lookup table can be structured also to account for several values of the vehicle mass, i.e. it may be a multidimensional array wherein one dimension relates to, for example, the vehicle mass, another dimension relates to the type of soil and/or another dimension relates to the pressure of the tire etc.

Once the stiffness of the tire is known, a natural frequency of the vehicle can be evaluated and then the pressure of the tire can be varied in order to shift its natural frequency away from the dominant excitation frequency.

The lookup table may be used in variable ways within the context of the invention. The pressure value may be used as input to obtain the stiffness of the tire whilst the stiffness value may also be used as input to obtain the pressure target to be reached in order to render the tire immune to the exciting effect.

Shifting the natural frequency of vertical oscillation away from the dominant excitation frequency may happen by adjusting the tire pressure to either increase or decrease the natural frequency of vertical oscillation. In case that two or more tire target pressures values are identified that shift the natural frequency of vertical oscillation away from the dominant excitation frequency to an approximately similar extent, the one which lead to a higher tire longitudinal force according to the applied mathematical model is selected.

According to a preferred aspect of the invention, a closed loop control may be implemented to adjust the pressure value in a range including the selected target tire pressure in order to further reduce the amplitude of the acceleration of the cab under a predetermined threshold.

According to a further preferred aspect of the invention, the selection of the tire target pressure could lead to a reduction of the transmission losses. Therefore, the engine would benefit of an excess of power. This excess of power can be exploited to shift the engine working point in towards a more efficient working point, leading to a fuel consumption reduction, or to a productivity increase.

The productivity increase could represent an increase of the vehicle speed or an improvement of torque available to a PTO.

These and further objects are achieved by means of the attached claims, which describe preferred embodiments of the invention, forming an integral part of the present description.

<u>Brief description of the drawings</u>

The invention will become fully clear from the following detailed description, given by way of a mere exemplifying and non limiting example, to be read with reference to the attached drawing figures, wherein:

- Fig. 1 shows a tire traction model obtained according to a known mathematical method where different soil types is one of the input;
- Fig. 2 shows the effects of pressure on a tire experiencing a vertical load and tire deflection;
- Fig. 3 discloses a schematic correspondence between an agricultural vehicle and its frequency analysis;
- Fig. 4 discloses an example of flow diagram of a method implementing the present invention;
- Fig. 5 discloses an example of control scheme of a tire pressure adjustment;
- Figgs. 6 and 7 disclose two possible way to exploit an excess of power available thanks to the present invention.

The same reference numerals and letters in the figures designate the same or functionally equivalent parts.
According to the present invention, the term "second element" does not imply the presence of a "first element", first, second, etc... are used only for improving the clarity of the description and they should not be interpreted in a limiting way.

Detailed description of the preferred embodiments

The following table represents an example of input parameters for the mathematical model that is used to determine the natural frequency of oscillation of the vehicle:

**Table 1**

| Soil type | Hard | 1800 |
|---|---|---|
| vehicle mass | kg | 4050 |
| tire seection width | b | 0,30 |
| tire overall diameter | d | 1,42 |
| rolling radius | r | 0,68 |
| tire section height | h | 0,26 |
| tire deflection | delta | 0,027 |
| traction | H | |
| tire vertical load | W | 19,87 |

Usually, several of said parameters are fixed as the geometry of the tires is fixed. Once a vehicle is in use, some of the above parameters may remain constant, for example the tire dimensions. Others may vary, for example the soil type which may affect the traction and the vehicle mass. A finite number of vehicle mass values as a finite number of soil type can be considered, in order to avoid an on-line calculation of the traction models.

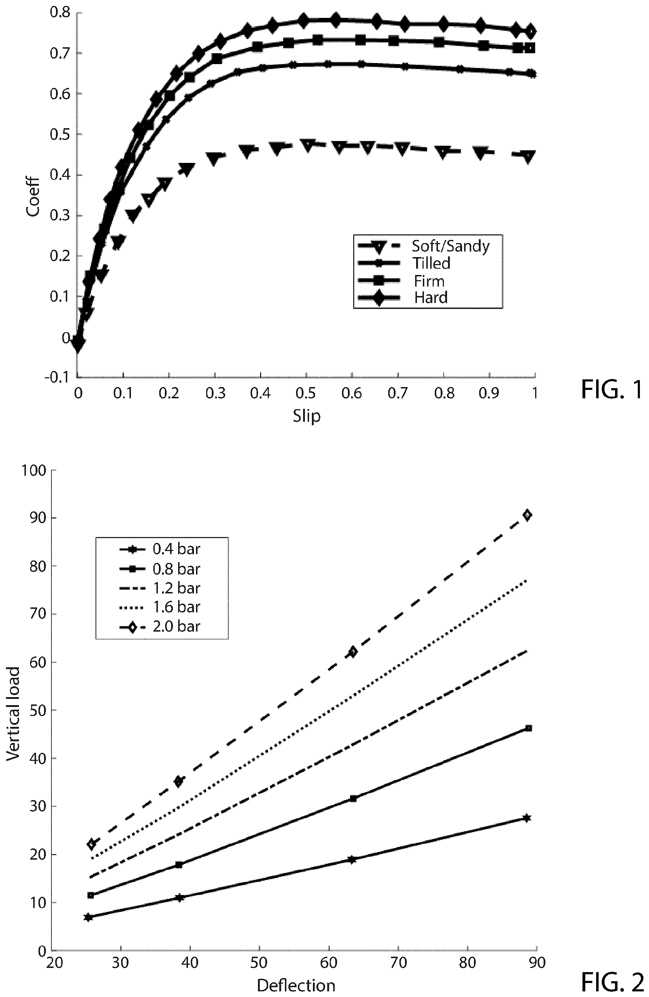

Figure 1 illustrates the effects of tire slipping on traction coefficient for a predefined vehicle mass when the vehicle traverses soils of different type. A number of diagrams as those in Figure 1 can be obtained, corresponding each to a different value of the vehicle mass. The illustrated results may be saved in a lookup table as mentioned above. Based on Pacejka's Magic Formula, the effects of variable tire pressure on the traction coefficient may also be calculated. It is thus possible to calculate and plot the relationship between tire pressure, tire deflection and vertical loads as illustrated in Figure 2. In addition, thanks to the vertical stiffness it is possible to calculate a natural frequency of the vehicle along a vertical oscillation mode. The pairing of the two mathematical models provides a relationship among vehicle mass, soil type, tire pressure and traction coefficient.

Starting from the traction coefficient, it is possible to determine the tire traction force, while through the pressure, the tire stiffness can be determined, which is the basis for the natural frequency calculation.

The soil type may be obtained by manual input from the vehicle user or can be detected autonomously by means of a laser scanner or my means of neural networks trained to analyse soil images and to determine its superficial consistency.

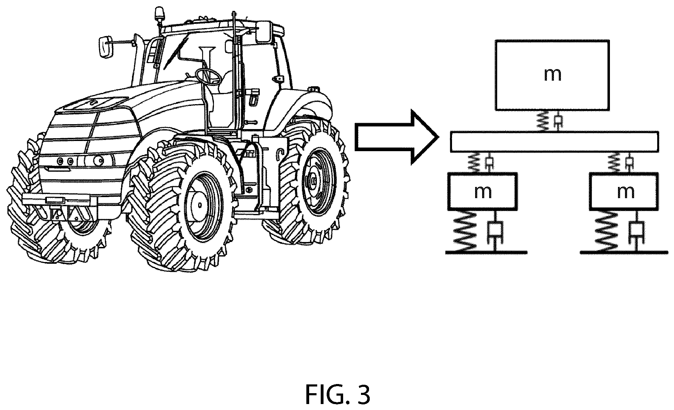

In some embodiments of the invention, the vehicle is modelled as a set of masses and dumpers/springs as depicted in Fig. 3. As mentioned above, dynamic modelling of the vehicle along the vertical direction is a quite investigated topic in literature and will not be discussed further. Several masses defining the vehicle can be modelled in order to identify their natural frequency. In particular, the natural frequency is identified whose mode provides vertical oscillations of the cab e.g. the first mode.

According to the invention, when the user requests an improvement of the comfort, for example by means of a button on the dashboard or a setting through a menu in a touch screen display of the dashboard, a control unit CU or VCU is configured to acquire an acceleration signal generated by a sensor associated with the cab. Comfort improvement may also be instructed by an on-board adaptive control system e.g. upon reaching a pre-define cab amplitude oscillation threshold.

The CU may identify a dominant excitation frequency e.g. generated when the vehicle travels on a non-flat road, and compares such excitation frequency with the natural frequency.

Shifting the natural frequency of vertical oscillation away from the dominant excitation frequency may happen by adjusting the tire pressure to either increase or decrease the natural frequency of vertical oscillation. Therefore, two or more target pressure values may be identified that suppress the effects of the dominant excitation frequency. In some embodiments, the pressure value corresponding to a higher tire traction and/or longitudinal force will be selected. In other embodiments, the pressure value that is closer to the current tire pressure value may be selected.

As described above, adjusting the pressure of at least on tire to improve the comfort of the operator of the vehicle may result in different power losses as different amount of energy is dissipated as heat. The effect of different pressure on the power losses in automobile tires is well established in the literature, for example in *"Power Losses In Automobile Tires"* (by William Leslie Holt and Philip Lightfoot Wormeley, US Government Printing Office, 1922).

Thus the change in power losses due to a change in the pressure in the automobile's tires may leads to an excess of power available to the crankshaft in the same fuel consumption conditions.

This excess of power can be exploited in two ways:

- The fuel consumption can be improved,
- The productivity can be improved.

The fuel consumption can be improved by moving the engine working point in point of higher efficiency. This result can be achieved by reducing the engine speed and maintaining unchanged the vehicle speed by adapting the vehicle transmission ratio.

Work and agricultural vehicles are provided with a transmission including a hydrostat, which permits to easily maintain the engine working point on the same iso-power curve, while the tire losses are minimized.

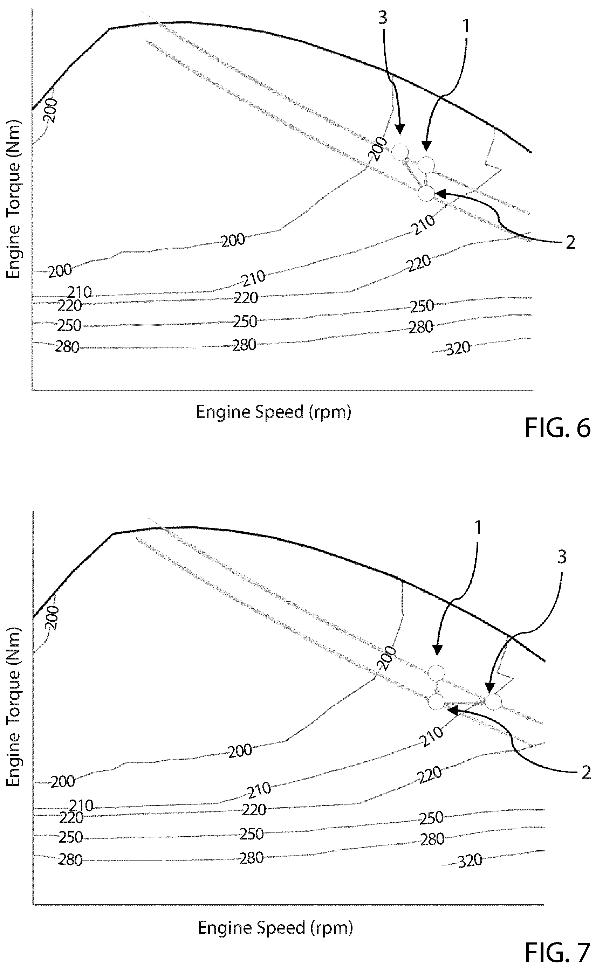

Figures 6 and 7 disclose, in the form of sequences of transitions of engine working points, transitions in engine outputs according to embodiments of the invention.

In Figure 6, starting point 1 corresponds to the current engine working point, i.e. the engine working point when the operator provides an input to the vehicle. After the CU determines the tire target pressure for the at least one tire of the vehicle that will reduce the vertical acceleration of the agricultural vehicle, the CU may determine a change in power losses on the tires based on the respective current tire pressure and the respective tire target pressure. The CU may then determine the required power output of the engine based on the current engine output and the determined change in power losses, which in turn may be use to determine a first engine working point based on the required power output. The first engine working point is marked as working point 2 in Figure 6.

In response to determining that a second engine working point in an isopower curve of the current engine output exists that produces the same engine torque as the current engine working point with a first fuel efficiency, wherein the first fuel efficiency is greater than the fuel efficiency of the current engine working point, the CU may select the target engine working point to be the second engine working point. The second engine working point is marked in Figure 6 as 3.

In response to determining that a second engine working point in an isopower curve of the current engine output does not exist that produces the same engine torque with fuel efficiency greater than the fuel efficiency of the current engine working point, the CU may determine a third engine working point in the isopower curve of the current engine output by adjusting the engine speed until tire slipping is reduced, or, if no slipping occurs just increase the engine speed (or in other words until productivity is improved). The CU may then select the target engine working point to be the third engine working point, marked 3 in Figure 7.

In some embodiments, the user may provide input that will influence the CU towards selecting a target engine working point that improves efficiency or productivity.

The user may be notified with a request of selection between the above two strategies for a predetermined time interval. If the user does not return a selection, according to a preferred embodiment of the invention, the VCU may be configured to automatically select the fuel consumption strategy.

In some embodiments of the invention, if the user does not request an improvement in terms of comfort, then the VCU is free to select as target tire pressure the one which maximize the traction force, regardless the increasing of the accelerations on the cab.

Also in this case, when the target tire pressure is identified by means of the above mathematical model, then the user is notified with a request of selection between the above two strategies, an lacking a selection, the VCU selects the fuel consumption strategy.

A reduction of the cab vertical oscillations due to tire pressure adjustment may thus cause a power loss reduction that the VCU converts in a new engine working point. For example, the VCU receives as input the current engine output e.g. current engine working point in order to establish a current isopower curve and adjusts an engine working parameter e.g. engine speed either to move in a higher engine efficiency region or to increase productivity (this is may be achieved by increasing the engine speed if wheel slipping does not occur, or reducing the engine speed to reduce wheel slipping if slipping does occur). Preferably, in both cases, the target engine working point rests on the same isopower curve identified with the current engine working point, e.g. immediately before starting the tire pressure adjustment process.

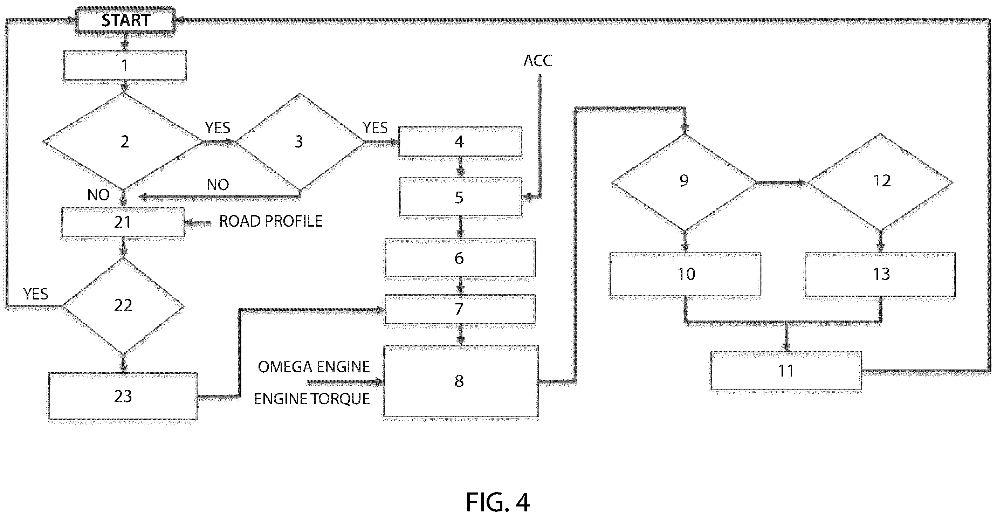

Figure 4 discloses an example of diagram of the present invention executed in cyclic manner:

Step 1: Start

Step 2: acquisition of a current tire pressure value, this step can be executed even later as described below;

Step 3: checking whether user has selected a setting among Comfort, Fuel consumption or Productivity; if yes (2 = YES), then

Step 3: checking whether Comfort is selected, if yes (3 = Yes), then

Step 4: calculation of a current tire stiffness k value, the tire pressure value can be acquired even just before stiffness calculation, then

Step 5: acquisition of the signal representative of vertical oscillation of the vehicle cab through the above accelerator sensor, and extraction of the dominant exciting frequency (DEF) value and a corresponding dominant exciting modulus value,

Step 6: calculation of at least one target tire stiffness values such that a corresponding natural frequency value of a vertical oscillation mode of the vehicle is far from said dominant exciting frequency, and identification of a corresponding at least one tire pressure value improving a tire traction force

Step 7: setting said tire pressure as target tire pressure,

Step 8: acquisition of the current engine output representative of a current engine torque value and/or a current engine speed value e.g. a current engine working point,

Step 9: in view of the tire target pressure selected and the current engine point, checking whether Fuel consumption can be improved based on the BSFC maps charged in a dedicated look up table, if yes (9 = Yes), then

Step 10: identification of a new engine working point improving Fuel consumption wherein the new engine working point and the current engine point are on a same isopower curve. Isopower curves denote curves in the BSFC maps wherein the engine output remains constant.

Step 11: modification of the tire pressure in order to assume a target tire pressure corresponding to the above selected target tire stiffness AND adaptation of the engine speed and transmission ratio in order to achieve said new engine working point, otherwise if Fuel consumption cannot improved (9 = NO), then

Step 12: checking whether a better productivity can be achieved, if yes (12 = yes), then

Step 13: identification of a new engine working point improving vehicle productivity wherein the new engine working point and the current engine point are on a same isopower curve and then go to Step 11 ;

In case, instead, the user does not select any of the above possible settings (2 = NO) or the setting is not comfort (3 = NO), then

Step 21: acquisition of a signal indicative of soil type, then

Step 22: checking whether the current tire pressure value leads to a higher traction force, in the affirmative (22 = Yes) go to START, otherwise

Step 23: calculation of a target tire pressure value improving the tire traction force and go to step 7.

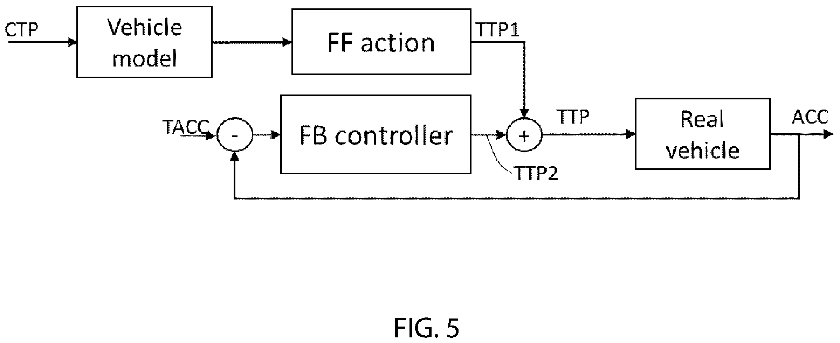

The shifting towards the target tire pressure can be realized gradually by means of a closed loop scheme as disclosed in figure 5, based on the acceleration amplitude as the controlled variable.

Figure 5 discloses a control scheme where the input variable is the current tire pressure. A feed forward controller, named as "FFaction" executes at least all the steps 2 - 7 and 11. However, according to the preferred variant disclosed in Fig. 5 said target pressure represents a first contribute TTP1 to the target pressure TTP, while a second branch defining a closed loop, calculates a second contribute TTP2 on the basis of an error calculated as the difference between a threshold value of the acceleration amplitude and the amplitude represented by the electric signal generated by the accelerometer associated to vehicle cab. In other words, the control scheme of figure 5 implements the solution S3 disclosed above, by combining a feed forward calculation with a closed loop calculation.

The block named as "FB Controller" is a regulator, such as a PID, and the block "Real vehicle" represents the vehicle subjected to the variation of the tire target pressure and to the effects of the acceleration induced by the motion of the vehicle on the soil.

The present invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

**Claims**

1. A method for improving the efficiency and comfort of an agricultural vehicle comprising a central tire inflation system (CTIS) with an on-board air compressor and at least one tire operatively connected to the compressor, the method being operated by computer and comprising:

    receiving an input from the operator of the agricultural vehicle;
    in response to determining that the input represents a request for improving driver comfort:

        obtaining a current pressure signal indicating the current tire pressure for the at least one tire of the vehicle;
        determining a tire target pressure for the at least one tire of the vehicle to reduce the vertical acceleration of the agricultural vehicle;
        modifying, via the CTIS, the current pressure for the at least one tire of the vehicle to be equal to the tire target pressure;

obtaining a current engine power signal, indicating the current engine output for a current engine working point;

determining a change in power losses on the tires based on the respective current tire pressure and the respective tire target pressure; and

determining a target engine working point based on the determined change in power losses and the engine output for the current engine working point.

2. Method according to claim 1, wherein determining a tire target pressure comprises:

obtaining a first signal representative of an acceleration of the vehicle cab and extraction of a dominant exciting frequency (DEF) value;

obtaining a current tire pressure value (CTP),

obtaining data indicating a type of soil, the soil being the soil on which the agricultural vehicle is located;

determining a first natural frequency of a vertical oscillation mode of the agricultural vehicle based on the current pressure signal and the type of soil;

determining the tire target pressure by modifying the tire pressure in order to shift away said natural frequency (NET) value from the dominant exciting frequency.

3. Method according to claim 2, wherein the determination of the first natural frequency of the vertical oscillation mode of the agricultural vehicle is based on a mathematical model or lookup table associating at least a vehicle mass, a tire pressure, a soil type and a tire stiffness.

4. Method according to claim 3, wherein said modification of the tire pressure includes an identification of at least one tire target pressure and wherein, when there are at least two tire target pressure values shifting away said natural frequency, then selection of the one corresponding to a higher tire longitudinal force according to said mathematical model.

5. Method according to any of claims 1-4, wherein determining the target engine working point further comprises

determining the required power output of the engine based on the current engine output and the determined change in power losses;

determining a first engine working point based on the required power output;

in response to determining that a second engine working point in an iso-power curve of the current engine output produces the same engine torque with a first fuel efficiency, wherein the first fuel efficiency is greater than the fuel efficiency of the current engine working point, selecting the target engine working point to be the second engine working point.

6. Method according to claim 5 wherein:

in response to determining that a second engine working point in an iso-power curve of the current engine output does not exist that produces the same engine torque with fuel efficiency greater than the fuel efficiency of the current engine working point;

determining a third engine working point in the iso-power curve of the current engine output by adjusting the engine speed until tire slipping is reduced; and

selecting the target engine working point to be the third engine working point.

7. Method according to anyone of the previous claims 3 - 6, wherein said mathematical model is generated in the form of a look-up table according to the following steps:

- First acquisition of tire geometrical parameters and soil surface types,
- First calculation of a first tire traction model on the basis of said first acquisition expressing a traction coefficient as a function of a slip coefficient and vehicle mass,
- Second acquisition of at least a tire pressure value,
- Second calculation of a second tire model according to Pacejka algorithm on the basis of said geometrical parameters and said at least a tire pressure value,
- combining of said first and second traction models in order to obtain said first lookup-table putting in relation soil surface type, vehicle mass value, tire pressure value and vertical stiffness value of the tire.

8. Method according to any of the preceding claims, wherein in response to determining that the signal setting does not represent a request to reduce a vertical acceleration of the agricultural vehicle determining the target tire target pressure for each tire of the vehicle for maximizing the traction coefficient.

9. Agricultural vehicle including a wheel and a tire associated to said wheel, a central tire inflation system (CTIS) provided with an on-board air compressor operatively connected with the tire, a cab, an accelerometer associated to the cab, an engine arranged to drive in rotation said wheel and a vehicle control unit (VCU) configured to control said compressor in order to manage a tire pressure, the vehicle control unit being configured for executing all the steps of any of the previous claims from 1 to 8.

10. A computer program comprising instructions for causing the vehicle control unit of claim 9 to implement the method of any of claims 1-8.

11. A computer readable medium having stored the program of claim 10.

FIG. 1

FIG. 2

FIG. 3

FIG. 4

FIG. 5

FIG. 6

FIG. 7

# EUROPEAN SEARCH REPORT

Application Number

EP 25 16 5456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 506 761 B2 (DEERE & CO [US]) 17 December 2019 (2019-12-17) * the whole document * | 1-11 | INV. B60C23/00 A01B67/00 A01B71/02 F02D41/02 |
| A | US 2021/237520 A1 (EHLERT CHRISTIAN [DE] ET AL) 5 August 2021 (2021-08-05) * the whole document * | 1-11 | |
| A | US 2016/082789 A1 (WIECKHORST JAN CARSTEN [DE] ET AL) 24 March 2016 (2016-03-24) * the whole document * | 1-11 | |
| A | EP 3 243 368 A2 (CLAAS TRACTOR SAS [FR]) 15 November 2017 (2017-11-15) * the whole document * | 1-11 | |

TECHNICAL FIELDS SEARCHED (IPC)

B60C
F02D
B60W
A01B

The present search report has been drawn up for all claims

| Place of search | Date of completion of the search | Examiner |
|---|---|---|
| Munich | 15 July 2025 | Schork, Willi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 5456

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2025

| Patent document cited in search report | | Publication date | Patent family member(s) | | Publication date |
|---|---|---|---|---|---|
| US 10506761 | B2 | 17-12-2019 | AU | 2017203232 A1 | 18-01-2018 |
| | | | BR | 102017009022 A2 | 26-12-2017 |
| | | | CN | 107521293 A | 29-12-2017 |
| | | | US | 2017359957 A1 | 21-12-2017 |
| | | | US | 2020022307 A1 | 23-01-2020 |
| US 2021237520 | A1 | 05-08-2021 | DE | 102020102330 A1 | 05-08-2021 |
| | | | EP | 3858644 A1 | 04-08-2021 |
| | | | US | 2021237520 A1 | 05-08-2021 |
| US 2016082789 | A1 | 24-03-2016 | DE | 102014113466 A1 | 24-03-2016 |
| | | | EP | 2998133 A1 | 23-03-2016 |
| | | | US | 2016082789 A1 | 24-03-2016 |
| EP 3243368 | A2 | 15-11-2017 | EP | 3243368 A2 | 15-11-2017 |
| | | | PL | 3243368 T3 | 18-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ÖZGÜR BAYRAKDAR**. Random vibration of a road vehicle. Izmir Institute of Technology, 2010
- A Study of Vehicle Vibration with Multiple Degrees of Freedom Using OCTAVE and ANSYS. **ALEXANDER WRAY ; JACOB REED ; SHENGYONG ZHANG**. Journal of Physics: Conference Series. IOP Publishing, 2021, vol. 2014
- **WILLIAM LESLIE HOLT ; PHILIP LIGHTFOOT WORMELEY**. Power Losses In Automobile Tires. US Government Printing Office, 1922